# EUROPEAN PATENT SPECIFICATION

(11) **EP 2 137 439 B1**
(45) Date of publication and mention of the grant of the patent: **20.06.2012**
(21) Application number: 08719024.5
(22) Date of filing: 14.03.2008
(51) Int. Cl.: F16K 3/08, F16L 37/367

(54) **Fluid coupling**
Fluidkupplung
Coupleur hydraulique

(30) Priority: 16.03.2007 GB 0705090
(43) Date of publication of application: 30.12.2009
(73) Proprietor: Vmtechnology Ltd, Cambridge Cambridgeshire CB5 8EG (GB)
(72) Inventor: BISUTTI, Giovanni, Cambridge Cambridgeshire CB5 8EG (GB)
(74) Representative: Evens, Paul Jonathan
(86) International application number: PCT/GB2008/050179
(87) International publication number: WO 2008/114048

(56) References cited:
- WO-A-86/05568
- DE-C- 295 130
- GB-A- 559 456
- US-A- 2 426 471
- US-A- 2 749 146
- US-A- 2 828 146
- US-A- 2 941 820
- US-A- 6 026 845

## Description

### Technical Field

The present invention relates to couplings for releasably joining together two fluid conduits.

### Background Art

Couplings of the aforementioned kind may comprise two ball valves, each of which rotates about an axis perpendicular to the direction of flow. An alternative design employs two butterfly valves, the discs of which abut prior to rotation to allow fluid flow. Such rotation is again about an axis perpendicular to the direction of flow.

A particular form of coupling, known inter alia as a 'dry break' coupling, is designed such that it does not leak fluid when the conduits are separated. This is achieved by avoiding any volume between the two valves in which fluid can be retained after the valves have been closed and which would otherwise leak out when the two conduits are separated. However, such known constructions may present significant resistance to flow (with the associated energy consumption), may lack the ruggedness required for certain environments and/or may obstruct the passage of suspended solids if present in the fluid. They may additionally be cumbersome to connect/disconnect and be limited in their maximum working pressure.

One application for such couplings is in percussion power tool systems of the kind disclosed in WO99/10131, incorporated herein by reference. Such a system allows the deadweight of the power tool to be varied and comprises a chamber for mounting on the tool, a fluid reservoir supported independently of the tool, and means for cyclically filling the chamber with fluid from the reservoir in order to increase the deadweight of the apparatus and subsequently emptying the chamber by returning fluid to the reservoir in order to decrease the deadweight of the apparatus.

It is one objective of the present invention to provide an improved coupling that at least ameliorates one or more of the above disadvantages.

GB-A-559456 discloses a coupling according to the pre-characterising portion of claim 1. US-A-6026 845 discloses an axially rotated valve which uses an axial eccentric split venturi with two portions where at least one portion is rotatable with respect to the other portion.

### Disclosure of Invention

According to the present invention, there is provided a coupling for releasably joining together two fluid conduits, comprising: first and second connectors each for attachment to a fluid conduit and each having a body with a longitudinal axis, each body having a lumen for fluid flow therethrough in a predetermined direction between first and second apertures, with the first aperture being offset from the longitudinal axis; the first and second connectors being releasably interconnectable, with the lumens in their respective bodies being registerable when interconnected so as to permit and control flow therebetween, with each connector comprising a shutter having an aperture for fluid flow therethrough, the shutter being moveable relative to the lumen and in a plane perpendicular to the longitudinal axis of its body from a first position blocking the first aperture in which fluid flow through the lumen is prevented to a second position in which fluid flow through the lumen is allowed, the shutters being configured to abut when said first and second connectors are interconnected; characterised in that the first aperture of each body has a substantially semi-circular cross-section, and at least one connector comprises a plug to block the respective aperture when the shutter is in said first position.

Unlike some conventional couplings, for example the butterfly valve construction described above, the apparatus of the present invention does not have any valve parts that can protrude from the lumen. Amongst other things, this can provide a more rugged construction.

The coupling is configured such that the shutters of the two connectors abut when the first and second connectors are interconnected. Such abutment reduces any dead volume between the connectors that might otherwise harbour fluid that would leak out when the connectors were disconnected.

There may be provided an externally-actuable member for moving said plug in and out of engagement with its respective aperture. Alternatively, the plug of one connector may be biased into engagement with its respective aperture and be configured to move out of engagement when subject to the pressure of fluid in the lumen of the other connector. A plug may be configured to block the aperture of both connectors.

Advantageously, the shutter is configured to rotate about an axis substantially parallel to said predetermined direction. A connector may comprise a sleeve configured to rotate relative to the respective body defining a lumen. In this case, the plug may have a surface configured to engage the sleeve and move in and out of engagement with the respective aperture with rotation of the sleeve. Both connectors may comprise plugs, the plugs being configured to abut when the respective shutters are in their first positions.

The sleeve may rotate about the axis of the body and may have a bore in which the body rotates.

The shutter may be immovably fixed to the sleeve and may actually be integral with the sleeve. The lumen in the body may taper along its length, becoming narrower as it approaches the shutter. Adjacent the shutter, the axis of the lumen may be offset from the axis of the body.

The sleeve of the first connector may have a further bore configured to receive the second connector. The sleeve may also have an interconnector for releasably attaching the first connector to the second connector. The interconnector may be one half of a bayonet fixture.

BRIEF DESCRIPTION OF DRAWINGS

Embodiments of the invention will now be described by way of example with reference to the accompanying drawings, in which:

Figure 1 is a longitudinal cross-sectional view of a coupling not forming part of the invention in an open state in which fluid flow is permitted;

Figure 2 corresponds to the view of figure 1 when in a closed state in which fluid flow is prevented;

Figure 3 is an exploded perspective view of the coupling of figures 1 and 2;

Figures 4A and 4B are longitudinal cross-sectional views of one embodiment of the invention in closed and open positions;

Figures 5 and 6 are longitudinal cross-sectional views of another embodiment of the invention in closed and open positions;

Figure 7 is a longitudinal cross-sectional view of yet another embodiment of the invention; and

Figure 8 illustrates further detail of a coupling not forming part of the invention.

DETAILED DESCRIPTION OF SPECIFIC EMBODIMENTS

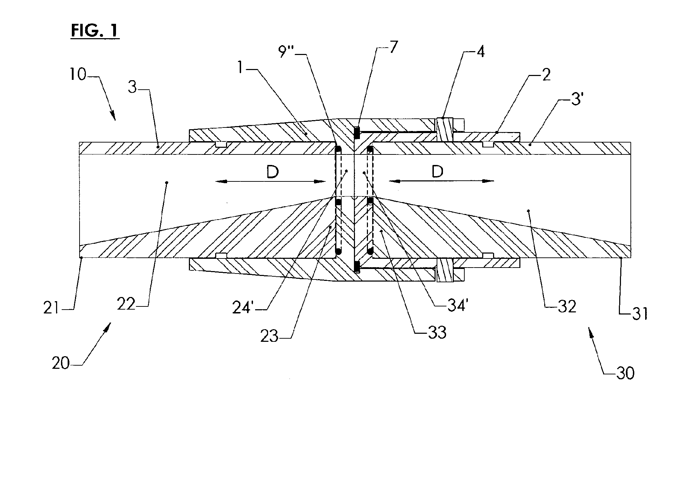

Figure 1 is a longitudinal sectional view of the coupling 10. The coupling comprises first and second connectors 20, 30 each configured for attachment (at respective ends 21 and 31) to respective fluid conduits (not shown), for example hydraulic hoses.

Each connector 20,30 has a cylindrical body 3,3' having a bore or lumen 22,32 for fluid flow therethrough in a predetermined orientation as indicated by arrows D. Registration of the respective lumens 22,32 at ends 23,33 of the connectors remote from the connections to the fluid conduits at 21 and 31 permits fluid to flow between the connectors 20,30. Swivel joints (not shown) may be provided in order that lumens and fluid conduits may move independently of one another.

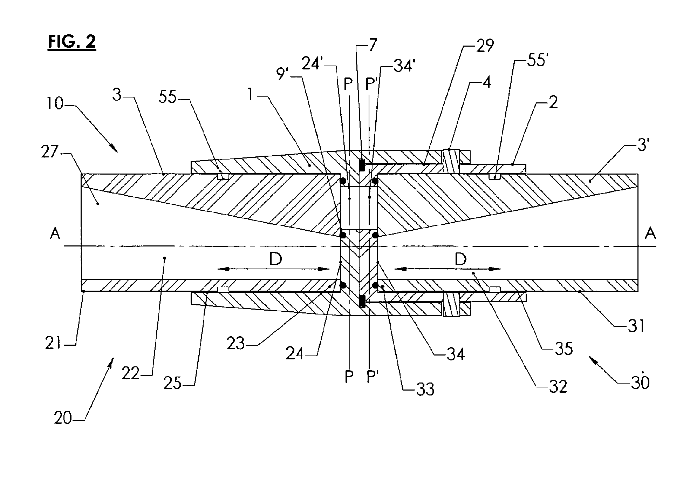

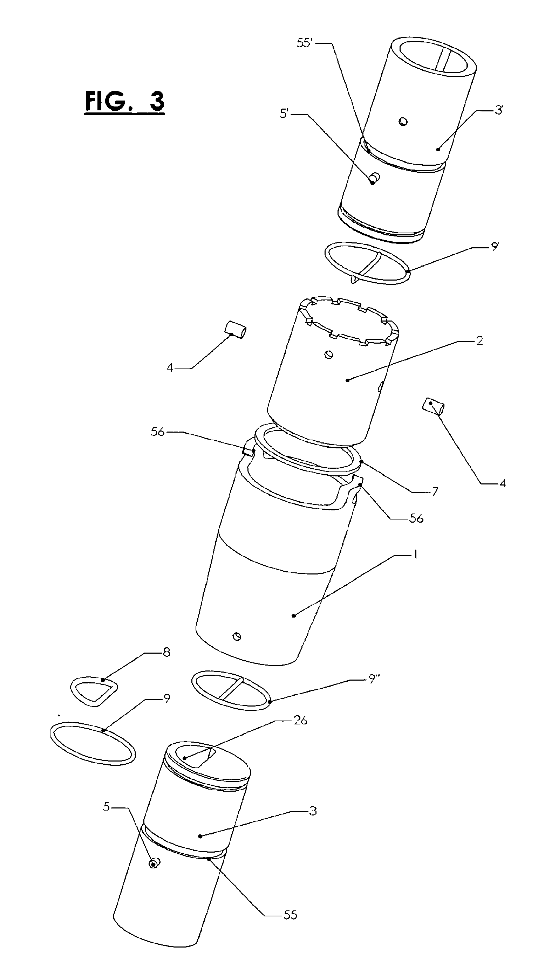

Figure 2 shows the coupling 10 when arranged to prevent fluid flow through the lumens 22,32 and hence between the connectors 20,30. Each lumen 22,32 is sealed at the end 23,33 by a respective shutter 24,34 provided with a seal member between the surface of the shutter and the end face of the body as shown at 8 in figure 3. The purpose of the seal member 8, sitting either in a groove on the face of cylindrical bodies 3,3' at the ends 23,33 or in a groove on the shutters 24,34 of bodies 1 and 2, is to prevent fluid loss between lumen and shutter in the closed position when the connector is not coupled to the other connector. An 'O' ring 9 sitting e.g. in a circumferential groove on the body 3, ensures a fluid-tight seal between sleeves 3,3' and bodies 1,2. Alternative configurations of this sealing arrangement are shown at 9'and 9" in figure 3 where the function of seals 8 and 9 are unified into a single item with seal 9" limiting the wetted area to shutters 24,34.

Referring to shutter 24, this is immovably fixed to and integral with a sleeve 1 having a bore 25 in which body 3 is mounted for relative rotation., A grab pin 5 in the sleeve engages a circumferential groove 55 in the body to keep sleeve and body in axial engagement without preventing relative rotation.

By rotating the sleeve 1 relative to the body 3 about the bore axis AA (which is also substantially parallel to the predetermined direction of fluid flow, D), shutter 24 can be moved relative to the respective lumen 22 from a first position of figure 2, in which fluid flow through the lumen 22 and the other connector 30 is prevented, to the second position of figure 1 in which fluid flow through the lumen and the other connector is allowed. Referring to figure 2, it will be evident that shutter 24 moves in a plane P which is substantially perpendicular to the predetermined orientation of fluid flow through the lumens of the connectors as indicated by arrows D. Shutter 34 similarly moves in a plane P' which is substantially perpendicular to the predetermined orientation of fluid flow D.

In the construction shown, the cross-sectional area of the lumen 22 at end 23 of the connector 20 is smaller than that at the end 21 of the connector for connection to the fluid conduits or hoses. As shown in figure 3, the end/aperture 26 of the lumen has a semicircular cross-section 26 offset from the axis of the body 3 and is sealed by a correspondingly D-shaped sealing ring or gasket 8. The cross-sectional area of lumen 22 at end 23 needs to be smaller than the area of shutter 24 to enable full overlap by the shutter itself. This means that the largest possible cross-sectional area of lumen 22 at end 33 needs to be less than half of the total available area at end 23, hence the semi-circular cross-section offset from the axis. Were this not the case, in the close position, the shutter would not fully overlap aperture 26 therefore not sealing properly. To reduce pressure losses, lumen 22 has a gradual taper from its end 27 adjacent the fluid conduit connection to the aperture 26.

Connector 30 has a similar construction with a shutter 34 forming part of a sleeve 2 having a bore 35 allowing relative rotation to the body 3'. Fluid sealing is provided by seal 9' which seals both the gaps between the shutter and the end face of the body and between body 3' and sleeve 2. A grab pin 5' and respective groove 55' ensures that the body cannot be ejected from the sleeve. Both grooves 55 and 55' can be semicircular so as to provide end stop positions for body 3,3' relative to sleeve 1,2. The grooves 55,55' may further be oriented such that when bodies 3,3' are rotated relative to their respective sleeves 1,2 to the fully open position, the twisting of the two fluid conduits attached to the connectors cancel each other out.

Connector 30 is however configured as a male connector component, insertable within a further bore 29 of the first, female connector 20 which is configured to receive the male connector. Located axially on the opposite side of the shutter 24 to bore 25, further bore also contains a flat gasket 7 to create a fluid seal between the first and second connectors.

The sleeve 1 of connector 20 is also provided with bayonet prongs (indicated at 56 in figure 3) which, on relative rotation of the two connectors, engage with pins 4 on the sleeve 2 of connector 30 to interconnect the two connectors together in a releasable fashion as is known per se.

The parts 56,4 of the interconnector are positioned on the circumference of the sleeves 1,2 such that the shutters 24, 34 (and indeed the corresponding apertures 24',34' in the faces of the sleeves 1 and 2 - see figure 1 - that allow fluid flow between the two connectors) are aligned. Relative rotation of the interconnected sleeves 1,2 relative to the connector bodies 3,3' (and the fluid hoses to which these may be attached), will rotate the respective shutters relative to the lumens and increase/decrease the obstacle to flow accordingly.

Not only do the shutters align following interconnection, they also abut so as to reduce the dead volume between the connectors that might otherwise harbour fluid that would leak out when the connectors are disconnected.

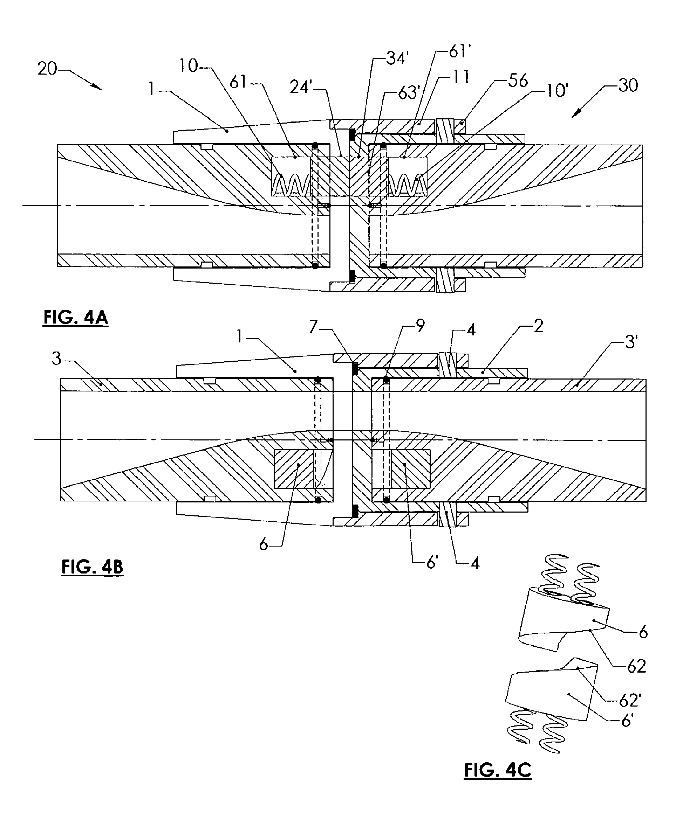

A small amount of fluid may still be retained in the apertures 24',34'. This amount is reduced in the embodiment of figures 4A and 4B, where each connector 20,30 is provided with plugs 6, 6' sliding in bores 61, 61' in the respective body 3,3' and biased by springs 10, 10'. As illustrated in figure 4A, plugs 6,6' slide into apertures 24',34' when the latter are not aligned for fluid flow, thereby filling the dead volume that would otherwise harbour fluid.

As shown in figure 4C, plugs 6, 6' are of semi-circular cross-section and have an end face having a partially helical (spiral) periphery 62, 62'. These faces are configured such that when the two plugs abut as shown in figure 4A, no dead volume is left between them. The spiral periphery also engages with the inside edge of the respective aperture (i.e. plug 6 engages with aperture inside edge 63 and plug 6' engages with edge 63') such that when the respective body 3 and 3' rotates relative to the respective sleeve 1 and 2, plugs 6, 6' move along bore 61, 61' against the bias of their springs 10, 10'.

The embodiment of figures 4A-C also utilises a bayonet locking mechanism in which the at least one prong 56 (for engaging with a pin 4 on sleeve 2 of connector 30) is mounted on a further sleeve 11 which is rotatable relative to the main sleeve 1 of connector 1). This allows the two connectors to be joined without rotation of sleeves 1,2 (which rotation will be prevented by engagement of the plugs 6,6').

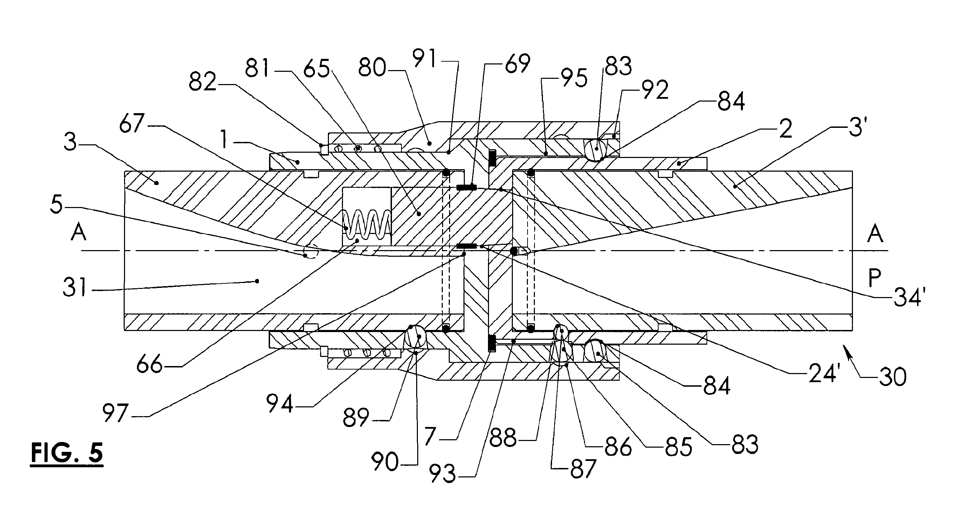

Figure 5 illustrates a different embodiment of a connector which, like the connector of figure 4, seeks to reduce dead volume that might otherwise give rise to leakage when the connectors are separated. A single plug 65 is biased by spring 67 so as to extend through the aperture 24' of connector 20 and into the aperture 34' of connector 30 where its end face abuts the body 3'. In this way, the dead volume of the apertures is filled.

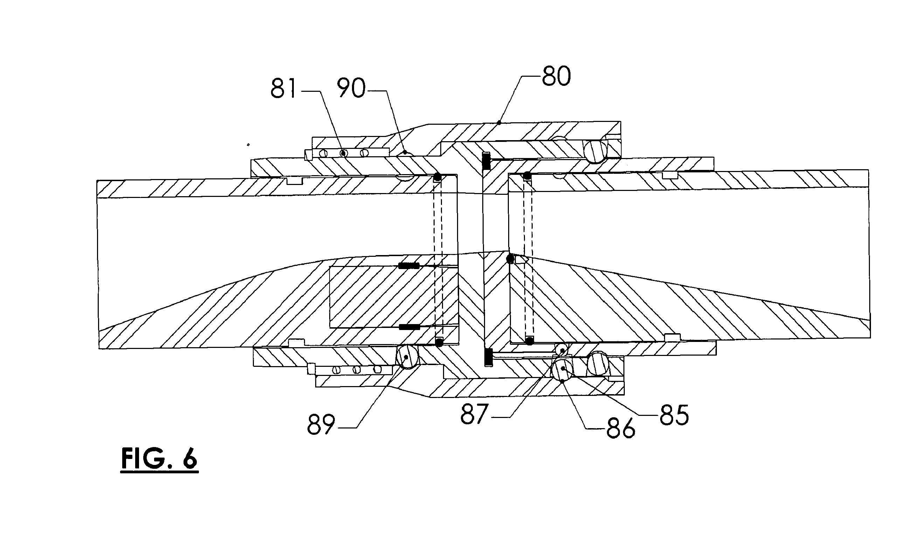

However, when body 3' is rotated so that lumen 32 is aligned with the end face of the plug, the fluid pressure pushes the plug out of both apertures 24', 34', allowing the body 3 of connector 1 to be rotated such that its lumen 22 aligns with lumen 32, thereby allowing fluid flow. This is illustrated in figure 6.

Seal 69 between the aperture 24' and plug 65 prevents any fluid escaping when the connector is disconnected with plug 65 fully exposed. It also prevents fluid ingress into chamber 66 behind the plug 65.

Connector 20 features a locking ring 80 freely rotating around axis AA and sliding along axis AA relatively to sleeve 1 between pin 5 and change of diameter 91 on sleeve 1. Locking ring 80 is normally kept against end stop 91 by spring 81 which compresses against clip 82. In this position ring 80 keeps locking balls 83, which are constrained within truncated conical housings in sleeve 1 to move radially, protruding beyond the internal cylindrical face 95 of sleeve 1. Ball 85, ball 87 and ball 89 are safety features preventing the accidental releasing of connectors 20 and 30 when the flow is on.

When connectors 20 and 30 are brought together the front face of sleeve 2 hits locking balls 83. To let connector 20 entering sleeve 1, locking ring 80 needs to slide to the left against end stop 5 so that circumferential groove 92 is presented to the balls enabling them to move away from sleeve 2 and not to protrude anymore beyond the internal cylindrical face 95 of sleeve 1.

When the outside cylindrical surface of sleeve 2 has gone beyond the plane of locking balls 83, locking balls 83 enter the space within groove 92 and by doing sow prevents locking ring 80 to move to its rest position. In this position, circumferential groove 86 is no longer facing ball 85 which is then made to protrude beyond the internal cylindrical face 95 of sleeve 1. To let sleeve 2 and therefore connector 20 further entering sleeve 1, groove 93 parallel to axis AA is provided on outside cylindrical surface of sleeve 2.

To let connector 20 further entering sleeve 1, plug 65 needs to engage with aperture 34'. When sleeve 2 butts against gasket 7 of sleeve 1, circumferential groove 84 on outside cylindrical surface of sleeve 2 is presented to locking balls 83 thus letting spring 81 to push locking ring 80 to its rest position. This in turn pushes locking balls 83 against groove 84 therefore securing connector 20 and 30 together.

When connectors 20 and 30 are engaged, as soon as body 3' is turned relatively to sleeve 2 around axis AA, hemispherical groove 88 on outside face of body 3' moves away from ball 87 constrained to move radially within a truncated conical housing in sleeve 2. Ball 87 is now pushed against ball 85 which in turn is pushed against circumferential groove 86 therefore preventing locking ring 80 from being slid and the connectors from being released.

Similarly, as soon as body 3 is turned relatively to sleeve 1 around axis AA, hemispherical groove 94 on outside face of body 3 moves away from ball 89 constrained to move radially within a truncated conical housing in sleeve 2. Ball 89 is now pushed against circumferential groove 90 therefore preventing locking ring 80 from being slid and the connectors from being released.

To disconnect connectors 20 and 30, first body 3' needs to be turned around AA to fully shut aperture 34'. Then body 3 can be turned around AA fully to present plug 65 to aperture 24'. Spring 67, which is in a loaded state can now extend to its original length and push plug 65 out fully to displace any fluid trapped within aperture 24' and 34' into lumen 31 though a small gap 97 between body 3 and sleeve1. To facilitate the displacement of the fluid trapped within the above said apertures the end of plug 65 and apertures 24' and 34' feature matching drafts so that contact surface to surface takes place in this area only when plug 65 is fully extended.

When body 3 fully shuts aperture 24' and body 3' fully shuts aperture 34', hemispherical grooves 94 and 88 are presented to balls 89 and 87 thus letting ball 89 and ball 85 to move away from circumferential grooves 90 and 87 respectively and thus enabling locking ring 80 to be slid again.

To release connector 20 from 30, locking ring 80 needs to be slid towards end stop 5 therefore presenting groove 92 to balls 83 and letting them move away from groove 84.

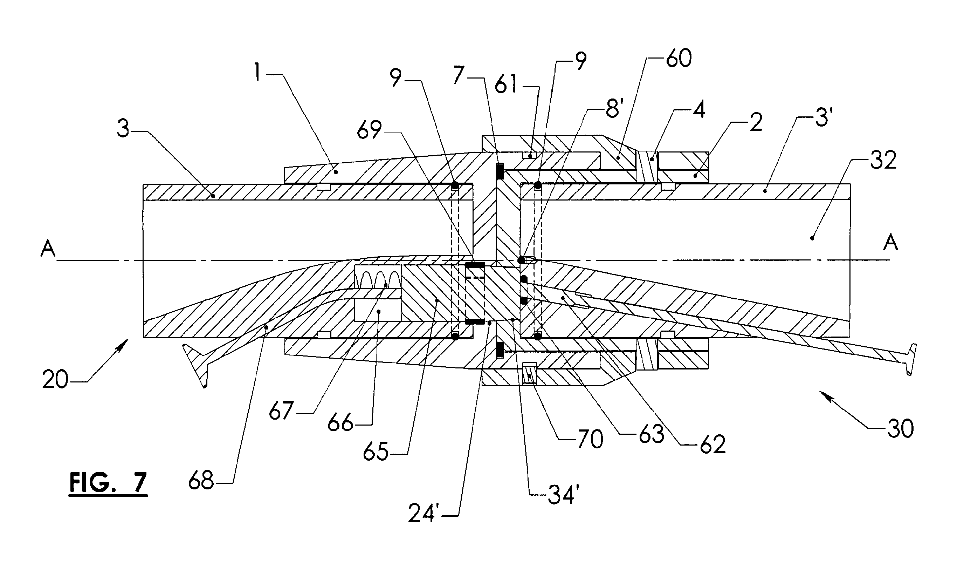

Figure 7 shows a further embodiment of the connector of figures 5 and 6 in which plug 65 is moved against spring 67 not by fluid pressure but instead by a push rod 62 acting on the front face of the plug 65 or by a pull rod 68 attached to the rear of the plug 65. Push rod to moves in a bore in the body 3' of connector 30 and may be sealed by an O-ring 63. Flexible pull rod moves in a bore in the body 3 of connector 2.

As with the previous embodiment, retraction of plugs 65 into chamber 66 allows both bodies 3.3' to be rotated relative to the sleeves 1,2, thereby aligning apertures 24',34' and lumens 22,32.

To disconnect connectors 20 and 30, first body 3 needs to be turned around AA to present plug 65 to aperture 24'. Spring 67, which is in a loaded state can now extend to its original length and push plug 65 out fully to displace any fluid trapped within aperture 24' and 34' into lumen 32. Body 3' can then be turned so that lumen 32 is presented against the shutter. Locking ring 60 can now be turned to release pin 40 thus allowing disconnection.

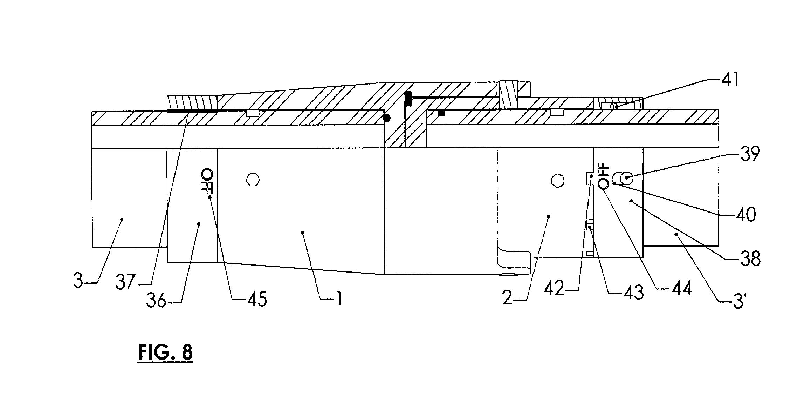

Referring to figure 8, this shows two possible solutions to make sure hose twisting does not cause unwanted opening or closing of coupling.

The first example employs a ring 36 concentric to body 3 and allows infinite locking positions between body 3 and sleeve 1. Ring 36 interfaces with body 3 through thread interface 37 which can be left handed or right handed. Ring 36 is therefore axially constraint to body 3 but can turn relatively to body 3. Depending on the orientation of the thread, ring 36 can be pressed against sleeve 1 by appropriately turning ring 36 relatively to body 3, therefore locking body 3 in any position relatively to sleeve 1.

The second example employs ring 38 concentric to body 3' and allows only discrete locking positions between body 3' and sleeve 2. Ring 38 is provided with a slot 40 acting as a guide and providing end stop positions for a pin 39 which is inserted in body 3'. Ring 38 is therefore rotationally constraint to body 3' but can slide relatively to body 3' in the direction of flow between two end positions. Ring 38 features a tooth 42 which may engage with any of a series of slots 43 on sleeve 2.

Spring 41 acting between ring 38 and pin 39 pushes ring 38 towards sleeve 2. By sliding ring 38 away from sleeve 2, tooth 42 disengages from sleeve 2 allowing body 3' to turn relatively to sleeve 2 until another position is reached where tooth 42 can engaged with another slot of the series of slots 43. Labelling 44 relatively to sleeve 2 or labelling 45 relatively to sleeve 1 indicates whether flow from one side of the coupling is prevented (OFF position shown), or flow is at its maximum in the fully open position (MAX position not shown) or at any intermediate flow rate.

## Claims

1. A coupling (10) for releasably joining together two fluid conduits, comprising:
first and second connectors (20,30) each for attachment to a fluid conduit and each having a body (3,3') with a longitudinal axis, each body having a lumen (22,32) for fluid flow therethrough in a predetermined direction between first and second apertures, with the first aperture (26) being offset from the longitudinal axis;
the first and second connectors (20,30) being releasably interconnectable, with the lumens (22,32) in their respective bodies being registerable when interconnected so as to permit and control flow therebetween, with each connector comprising a shutter (24, 34) having an aperture (24', 34') for fluid flow therethrough, the shutter (24,34) being moveable relative to the lumen and in a plane perpendicular to the longitudinal axis of its body from a first position blocking the first aperture (26) in which fluid flow through the lumen is prevented to a second position in which fluid flow through the lumen is allowed, the shutters (24,34) being configured to abut when the first and second connectors (20,30) are interconnected, **characterised in that** the first aperture (26) of each body has a substantially semi-circular cross-section, and at least one connector (20,30) comprises a plug (6, 6'), (65) to block the aperture (24', 34') of its shutter when the shutter (24,34) is in said first position.

2. Coupling (10) according to claim 1, wherein at least one connector (20,30) further comprises an externally-actuable member (62) for moving said plug (65) in and out of engagement with its respective aperture.

3. Coupling (10) according to claim 1, wherein the plug (6, 6'), (65) of one connector is biased into engagement with its respective aperture (24', 34') and is configured to move out of engagement when subject to the pressure of fluid in the lumen of the other connector.

4. Coupling (10) according to any one of claims 1 to 3, wherein said plug (65) is configured to block the aperture of both connectors.

5. Coupling (10) according to any preceding claim, wherein the or each shutter (24,34) is configured to rotate about the longitudinal axis of its respective body.

6. Coupling (10) according to any preceding claim, comprising a sleeve (1),(2) configured to rotate relative to the body of at least one connector (20,30) and to which its shutter (24,34) is immovably fixed.

7. Coupling (10) according to claim 6, wherein the sleeve (1) is configured to rotate about the longitudinal axis of the body, said sleeve (1) having a bore in which the body of one connector rotates and a further bore configured to receive the body of the other connector.

8. Coupling (10) according to claim 6 or claim 7, wherein the sleeve (1) comprises an interconnector (56,4) for releasably attaching the first connector to the second connector.

9. Coupling (10) according to claim 6 when dependent on claim 1, wherein the plug (6, 6') has a surface (62, 62') configured to engage the sleeve (1),(2) and move in and out of engagement with the respective aperture with rotation of the sleeve.

10. Coupling (10) according to claim 9, wherein both connectors (20,30) comprise plugs (6, 6'), the plugs being configured to abut when the respective shutters (24,34) are in their first positions.

11. Coupling (10) according to any one of the preceding claims, wherein, in each connector, the first aperture has a smaller cross-sectional area than the second aperture, with the lumen (22,32) tapering therebetween.

## Patentansprüche

1. Kupplung (10) zum lösbaren Verbinden von zwei Fluidleitungen miteinander, die Folgendes umfasst:
einen ersten und einen zweiten Verbinder (20, 30) jeweils zum Anbringen an einer Fluidleitung und jeweils mit einem Körper (3, 3') mit einer Längsachse, wobei jeder Körper ein Lumen (22, 32) für den Durchfluss von Fluid in einer vorbestimmten Richtung zwischen einer ersten und einer zweiten Öffnung aufweist, wobei die erste Öffnung (26) von der Längsachse versetzt ist;
wobei der erste und der zweite Verbinder (20, 30) lösbar miteinander verbunden werden können, wobei die Lumen (22, 32) in ihren jeweiligen Körpern beim Verbinden aufeinander ausgerichtet werden können, um Durchfluss dazwischen zuzulassen und zu regulieren, wobei jeder Verbinder eine Verschlussblende (24, 34) mit einer Öffnung (24', 34') für den Durchfluss von Fluid beinhaltet, wobei die Verschlussblende (24, 34) relativ zum Lumen und in einer Ebene lotrecht zur Längsachse seines Körpers von einer ersten Position, in der die erste Öffnung (26) versperrt wird, so dass der Durchfluss von Fluid durch das Lumen verhindert wird, in eine zweite Position beweglich ist, in der Durchfluss von Fluid durch das Lumen möglich ist, wobei die Verschlussblenden (24, 34) so konfiguriert sind, dass sie aneinander anliegen, wenn der erste und der zweite Verbinder (20, 30) miteinander verbunden sind, **dadurch gekennzeichnet, dass** die erste Öffnung (26) jedes Körpers einen im Wesentlichen halbkreisförmigen Querschnitt hat und wenigstens ein Verbinder (20, 30) einen Verschlussstopfen (6, 6'), (65) zum Versperren der Öffnung (24', 34') seiner Verschlussblende umfasst, wenn die Verschlussblende (24, 34) in der genannten ersten Position ist.

2. Kupplung (10) nach Anspruch 1, wobei wenigstens ein Verbinder (20, 30) ferner ein extern zu betätigendes Element (62) zum Bewegen des genannten Verschlussstopfens (65) in den und aus dem Eingriff mit seiner jeweiligen Öffnung umfasst.

3. Kupplung (10) nach Anspruch 1, wobei der Verschlussstopfen (6, 6'), (65) des einen Verbinders in Eingriff mit seiner jeweiligen Öffnung (24', 34') vorgespannt wird und so konfiguriert ist, dass er sich aus dem Eingriff bewegt, wenn er dem Druck von Fluid im Lumen des anderen Verbinders ausgesetzt wird.

4. Kupplung (10) nach einem der Ansprüche 1 bis 3, wobei der genannte Verschlussstopfen (65) zum Versperren der Öffnung beider Verbinder konfiguriert ist.

5. Kupplung (10) nach einem der vorherigen Ansprüche, wobei die oder jede Verschlussblende (24, 34) für eine Rotation um die Längsachse ihres jeweiligen Körpers konfiguriert ist.

6. Kupplung (10) nach einem der vorherigen Ansprüche, die eine Hülse (1), (2) umfasst, die für eine Rotation relativ zum Körper von wenigstens einem Verbinder (20, 30) konfiguriert ist und an der ihre Verschlussblende (24, 34) unbeweglich befestigt ist.

7. Kupplung (10) nach Anspruch 6, wobei die Hülse (1) für eine Rotation um die Längsachse des Körpers konfiguriert ist, wobei die genannte Hülse (1) eine Bohrung hat, in der der Körper von einem Verbinder rotiert, und eine weitere Bohrung, die zum Aufnehmen des Körpers des anderen Verbinders konfiguriert ist.

8. Kupplung (10) nach Anspruch 6 oder Anspruch 7, wobei die Hülse (1) einen Zwischenverbinder (56, 4) zum lösbaren Anbringen des ersten Verbinders am zweiten Verbinder umfasst.

9. Kupplung (10) nach Anspruch 6 in Abhängigkeit von Anspruch 1, wobei der Verschlussstopfen (6, 6') eine Oberfläche (62, 62') hat, die zum Eingreifen in die Hülse (1), (2) und zum Bewegen in den und aus dem Eingriff mit der jeweiligen Öffnung mit der Rotation der Hülse konfiguriert ist.

10. Kupplung (10) nach Anspruch 9, wobei beide Verbinder (20, 30) Verschlussstopfen (6, 6') umfassen, wobei die Verschlussstopfen so konfiguriert sind, dass sie aneinander anliegen, wenn die jeweiligen Verschlussblenden (24, 34) in ihren ersten Positionen sind.

11. Kupplung (10) nach einem der vorherigen Ansprüche, wobei in jedem Verbinder die erste Öffnung eine kleinere Querschnittsfläche hat als die zweite Öffnung, wobei das Lumen (22, 32) sich dazwischen verjüngt.

## Revendications

1. Couplage (10) pour réunir de façon amovible deux conduits de fluide l'un à l'autre, comprenant :
un premier et un second raccords (20, 30), chacun étant destiné à être attaché à un conduit de fluide et chacun ayant un corps (3, 3') avec un axe longitudinal, chaque corps présentant une lumière (22, 32) pour procurer un passage de fluide à travers celle-ci suivant un sens prédéterminé entre une première ouverture et une seconde ouverture, alors que la première ouverture (26) est décalée par rapport à l'axe longitudinal ;
les premier et second raccords (20, 30) pouvant être raccordés l'un à l'autre de façon amovible, alors que les lumières (22, 32) ménagées dans leurs corps respectifs peuvent être alignées quand elles sont raccordées l'une à l'autre de sorte à permettre et à piloter le flux passant entre elles, chaque raccord comportant un volet (24, 34), avec une ouverture (24', 34') pour procurer un passage de fluide à travers celle-ci, le volet (24, 34) pouvant être déplacé par rapport à la lumière et dans un plan qui est perpendiculaire à l'axe longitudinal de son corps à partir d'une première position, qui bloque la première ouverture (26) dans laquelle on empêche le flux de fluide de traverser la lumière, vers une seconde position dans laquelle on autorise le flux de fluide de traverser la lumière, les volets (24, 34) étant configurés de façon à abouter lorsque les premier et second raccords (20, 30) sont raccordés l'un à l'autre, **caractérisé en ce que** la première ouverture (26) de chaque corps présente une coupe transversale sensiblement semi-circulaire, et au moins un raccord (20, 30) comporte un obturateur (6, 6'), (65) pour bloquer l'ouverture (24', 34') de son volet lorsque le volet (24, 34) se trouve dans ladite première position.

2. Couplage (10) selon la revendication 1, un raccord au moins (20, 30) comprenant en outre un élément (62) actionnable de l'extérieur pour déplacer ledit obturateur (65) afin de le solidariser avec son ouverture respective, et de l'en désolidariser.

3. Couplage (10) selon la revendication 1, l'obturateur (6, 6'), (65) d'un raccord étant sollicité pour être solidarisé avec son ouverture respective (24', 34') et étant configuré pour se déplacer afin de se désolidariser quand il est soumis à la pression du fluide dans la lumière de l'autre raccord.

4. Couplage (10) selon l'une quelconque des revendications 1 à 3, ledit obturateur (65) étant configuré de façon à bloquer l'ouverture des deux raccords.

5. Couplage (10) selon l'une quelconque des revendications précédentes, le volet ou chaque volet (24, 34) étant configuré de façon à tourner autour de l'axe longitudinal de son corps respectif.

6. Couplage (10) selon l'une quelconque des revendications précédentes, comprenant un manchon (1), (2), configuré de façon à tourner par rapport au corps d'au moins un raccord (20, 30) et auquel son volet (24, 34) est fixé de façon inamovible.

7. Couplage (10) selon la revendication 6, le manchon (1) étant configuré de façon à tourner autour de l'axe longitudinal du corps, ledit manchon (1) possédant un alésage dans lequel tourne le corps d'un raccord et un alésage supplémentaire lequel est configuré de façon à recevoir le corps de l'autre raccord.

8. Couplage (10) selon la revendication 6 ou la revendication 7, le manchon (1) comprenant un dispositif d'intercommunication (56, 4) afin d'attacher de façon amovible le premier raccord au second raccord.

9. Couplage (10) selon la revendication 6 quand elle est dépendante de la revendication 1, l'obturateur (6, 6') présentant une surface (62, 62') qui est configurée pour se solidariser avec le manchon (1), (2) et se déplacer afin de se solidariser avec l'ouverture respective, et de s'en désolidariser, lors de la rotation du manchon.

10. Couplage (10) selon la revendication 9, les deux raccords (20, 30) comportant des obturateurs (6, 6'), les obturateurs étant configurés de façon à abouter lorsque les volets respectifs (24, 34) se trouvent dans leur première position.

11. Couplage (10), selon l'une quelconque des revendications précédentes, la première ouverture ménagée dans chaque raccord ayant une superficie en coupe transversale qui est plus petite que celle de la deuxième ouverture, alors que la lumière (22, 32) présente un profil conique entre celles-ci.
